(19) Europäisches Patentamt
European Patent Office
Office européen des brevets

(11) **EP 3 446 869 A1**

(12) **EUROPEAN PATENT APPLICATION**
published in accordance with Art. 153(4) EPC

(43) Date of publication:
27.02.2019 Bulletin 2019/09

(51) Int Cl.:
*B32B 7/02* (2019.01)  *B32B 27/18* (2006.01)
*C08K 5/02* (2006.01)  *C08L 101/00* (2006.01)
*H02N 11/00* (2006.01)

(21) Application number: 17785694.5

(22) Date of filing: 09.03.2017

(86) International application number:
PCT/JP2017/009398

(87) International publication number:
WO 2017/183351 (26.10.2017 Gazette 2017/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 20.04.2016 JP 2016084180

(71) Applicants:
• Alps Electric Co., Ltd.
Tokyo 145-8501 (JP)

• Stella Chemifa Corporation
Osaka-shi
Osaka
5410044 (JP)

(72) Inventors:
• TAKAHASHI, Isao
Tokyo 145-8501 (JP)
• NISHIDA, Tetsuo
Osaka City
Osaka 5410044 (JP)

(74) Representative: Schmitt-Nilson Schraud Waibel
Wohlfrom
Patentanwälte Partnerschaft mbB
Pelkovenstraße 143
80992 München (DE)

(54) **LAMINATE STRUCTURE, POLYMER ACTUATOR ELEMENT, SENSOR ELEMENT, AND EQUIPMENT**

(57) [Object] To provide a multilayer structure capable of serving as a member of a polymer actuator element with excellent low-temperature characteristics.

[Solution] A multilayer structure includes an electrolyte layer and electrode layers each of which is placed on a corresponding one of two principal surfaces of the electrolyte layer. The electrolyte layer includes a mixed ionic liquid containing a plurality of ionic liquids and a base polymer for electrolytes. The electrode layers both include a base polymer, a carbon material, and the mixed ionic liquid. The melting point $Tmm$ of the mixed ionic liquid is lower than the melting point $Tm1$ of a first ionic liquid which has the lowest melting point among a plurality of the ionic liquids.

FIG. 1

EP 3 446 869 A1

Printed by Jouve, 75001 PARIS (FR)

**Description**

Technical Field

The present invention relates to a multilayer structure capable of serving as a member of a polymer actuator element, a polymer actuator element including the multilayer structure, a sensor element including the multilayer structure, and a device including these elements.

Background Art

Patent Literature 1 describes a polymer actuator element including an electrolyte layer and electrode layers. The electrode layers contain activated carbon nanofibers and carbon nanohorns. In the polymer actuator element, the electrolyte layer contains an ionic liquid and a base polymer and the electrode layers contain the activated carbon nanofibers (ANCF), the carbon nanohorns (CNF), an ionic liquid, and a base polymer.

Citation List

Patent Literature

PTL 1: International Publication No. WO 2014/104331

Summary of Invention

Technical Problem

The above polymer actuator element can be readily downsized, can move softly unlike actuator elements including a driving device such as a motor, and is expected to be applied to various applications. Therefore, the polymer actuator element is preferably capable of moving stably in, for example, various environments such as low-temperature environments. However, an ionic liquid which is excellent in safety, motion efficiency, and the like and which is, therefore, generally used as an electrolyte for polymer actuator elements has a melting point within or close to the temperature range (-5 °C to 45 °C) of an environment in which the polymer actuator element is usually predicted to be used. Therefore, motion characteristics of the polymer actuator element decrease with an increase in viscosity at a temperature not higher than the melting point thereof.

The present invention has an object to provide a multilayer structure capable of serving as a member of a polymer actuator element (also referred to as "polymer actuator element with excellent low-temperature characteristics" in this specification) capable of enhancing motion stability in low-temperature environments. The present invention also has an object to provide a polymer actuator element including the multilayer structure, a sensor element including the multilayer structure, and a device including these elements.

Solution to Problem

An aspect of the present invention that is provided for the purpose of solving the above problem is a multilayer structure including an electrolyte layer and electrode layers each of which is placed on a corresponding one of two principal surfaces of the electrolyte layer. The electrolyte layer includes a mixed ionic liquid containing a plurality of ion species and a base polymer for electrolytes. The electrode layers both include a base polymer, a carbon material, and the mixed ionic liquid. The melting point Tmm of the mixed ionic liquid is lower than the melting point Tm1 of a first ionic liquid which has the lowest melting point among ionic liquids each composed of a corresponding one of a plurality of the ion species.

For a polymer actuator element, it is conceivable that one of operating principles is that an ionic liquid contained therein is polarized by the potential difference applied between electrode layers, arranged in a pair, sandwiching an electrolyte layer and migrates. Thus, the fluidity of the ionic liquid is cited as a factor of ease in the deformation of the polymer actuator element. Therefore, the motion stability of the polymer actuator element can be enhanced by reducing the melting point of an ionic liquid contained in a multilayer structure serving as a member of the polymer actuator element even when the polymer actuator element, which includes the multilayer structure, is placed in a low-temperature environment.

Therefore, the ionic liquid contained in the multilayer structure is changed to a mixed ionic liquid composed of a plurality of ionic liquids and the melting point Tmm of the mixed ionic liquid is set below the melting point Tm1 of a first ionic liquid which has the lowest melting point among ionic liquids each composed of a corresponding one of a plurality of ion species, whereby a multilayer structure capable of serving as a member of a polymer actuator element with excellent low-temperature characteristics is obtained.

From the viewpoint of stably obtaining the multilayer structure capable of serving as the member of the polymer actuator element with excellent low-temperature characteristics, the melting point Tmm of the mixed ionic liquid and the melting point Tm1 of the first ionic liquid preferably satisfy the following inequality:

$$Tmm1 \leq Tmm \leq Tmm1 + (Tm1 - Tmm1) / 2$$

(where Tmm1 is the melting point of a first mixed ionic liquid which has the lowest melting point among mixed ionic liquids obtained by varying the blending amount of a plurality of the ionic liquids forming the mixed ionic liquid).

The mixed ionic liquid may contain multiple types of cations. In this case, the mixed ionic species preferably contains multiple types of imidazolium cations in some cases.

From the viewpoint of ensuring the motion stability of a polymer actuator element including the multilayer structure over a long period, the mixed ionic liquid preferably contains triflate anions in some cases. In this case, it is preferable that the mixed ionic liquid contains 1-ethyl-3-methylimidazolium trifluoromethanesulfonate (EMI-TfO) and 1-butyl-3-methylimidazolium trifluoromethanesulfonate (BMI-TfO) and the ratio of the weight of 1-butyl-3-methylimidazolium trifluoromethanesulfonate (BMI-TfO) to the weight of 1-ethyl-3-methylimidazolium trifluoromethanesulfonate (EMI-TfO) contained in the mixed ionic liquid is 1.5 or more and 4 or less.

From the viewpoint of more stably ensuring the motion stability of the polymer actuator element including the multilayer structure, it is preferable that the electrode layers contain the carbon material and the ratio of the weight of the mixed ionic liquid to the weight of the carbon material is 0.5 or more and 3 or less.

Another aspect of the present invention is a polymer actuator element including the multilayer structure. Another aspect of the present invention is a device including the polymer actuator element as a movable portion. Another aspect of the present invention is a sensor element including the multilayer structure. Another aspect of the present invention is a device including the sensor element as a measuring portion. Another aspect of the present invention is a device which includes the multilayer structure and which enables the multilayer structure to function as an actuator element and to function as a sensor element.

Advantageous Effects of Invention

According to the present invention, a multilayer structure capable of serving as a member of a polymer actuator element with excellent low-temperature characteristics is provided. Furthermore, according to the present invention, a polymer actuator element including the multilayer structure, a sensor element including the multilayer structure, and a device including these elements are provided.

Brief Description of Drawings

Fig. 1 is a partial sectional view of a polymer actuator element according to an embodiment of the present invention.
Fig. 2 is a graph showing the relationship between the blending ratio of a mixed ionic liquid according to an example and the melting point.
Fig. 3 is a graph showing evaluation results of temperature characteristics of the motion of a polymer actuator element according to an example.

Description of Embodiments

A multilayer structure according to an embodiment of the present invention is described below in detail with reference to the accompanying drawings. The multilayer structure according to one embodiment of the present invention can serve as a member of a polymer actuator element. In descriptions below, a polymer actuator element composed of the multilayer structure according to one embodiment of the present invention is used as a specific example.

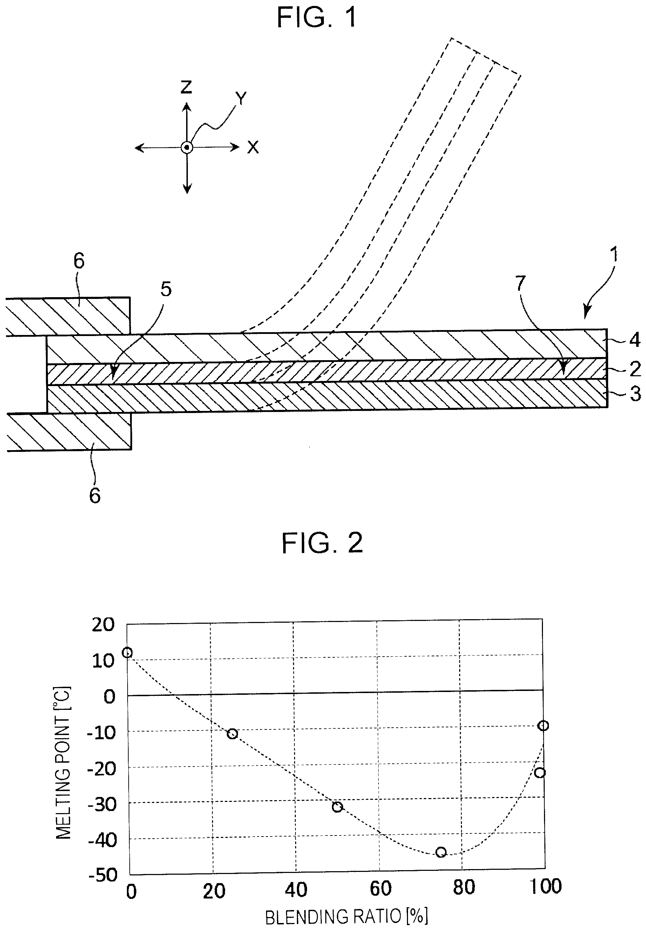

Fig. 1 is a partial sectional view of a polymer actuator element according to one embodiment of the present invention. As shown in Fig. 1, the polymer actuator element 1 according to one embodiment of the present invention includes an electrolyte layer 2 and electrode layers 3 and 4 formed on both surfaces of the electrolyte layer 2 in thickness directions (Z-directions in Fig. 1). The two electrode layers 3 and 4 and the electrolyte layer 2 are stacked such that a principal surface of each of the electrode layers 3 and 4 faces a corresponding one of principal surfaces of the electrolyte layer 2.

In an example shown in Fig. 1, a proximal end portion 5 of the polymer actuator element 1 is a fixed end portion. The proximal end portion 5 is immovably supported with fixing support portions 6 and 6 in a cantilevered manner. When a driving current is applied between the electrode layers 3 and 4 on both surfaces, a difference in volume occurs between the electrode layer 3 and the electrode layer 4 as indicated by dotted lines in Fig. 1 because of ion migration between the electrolyte layer 2 and the electrode layers 3 and 4. This causes bending stress, thereby enabling a distal end portion 7 of the polymer actuator element 1 that is a free end portion to be curved. The principle of causing a difference in volume between the electrode layers 3 and 4 because of the ion migration between is not generally unambiguous. It is known that one of typical principle causes is that the difference in ion size between cations and anions causes a difference in volume.

Herein, the fixing support portions 6 shown in Fig. 1 can be formed in the form of connections (feed portions) electrically connected to the electrode layers 3 and 4.

The electrolyte layer 2 of the polymer actuator element 1 contains a mixed ionic liquid containing a plurality of ionic liquids and a base polymer for electrolytes. The electrolyte layer 2 is formed so as to have a thickness of, for example, 10 $\mu$m to 30 $\mu$m.

The composition of the mixed ionic liquid is arbitrary as long as it is satisfied that the melting point $T_{mm}$ (unit: °C) of the mixed ionic liquid is lower than the melting point $T_{m1}$ of a first ionic liquid which has the lowest melting point among a plurality of the ionic liquids forming the mixed ionic liquid. Using the mixed ionic liquid enables low-temperature characteristics of the polymer actuator element to be enhanced as described below in examples.

A means for enhancing the low-temperature characteristics of the polymer actuator element 1 has been generally to increase the polymer actuator element 1 above the temperature of an environment, that is, to apply (heat) energy converted into heat to the polymer actuator element 1 from outside. Such means include a method in which a heater is placed outside the polymer actuator element 1 and heat from the heater is transferred to the inside of the polymer actuator element 1 from support portions (the fixing support portions 6), a method in which additional components for forming current paths in the electrode layers 3 and 4 or for generating a leakage current are attached to the electrode layers 3 and 4 and Joule heat is generated in the electrode layers 3 and 4, a method in which a high-frequency signal is superimposed on the voltage applied for the purpose of operating the polymer actuator element 1 and heat is generated by vibrating members (the ionic liquids and the like) of the polymer actuator element 1 using the high-frequency signal, and the like. A method for enhancing the low-temperature characteristics of the polymer actuator element 1 using the mixed ionic liquid is completely different from these methods. Thus, such a heating method as described above can be used for the polymer actuator element 1, in which the mixed ionic liquid according to one embodiment of the present invention is used.

The following compounds are exemplified as specific examples of an ionic liquid capable of forming the mixed ionic liquid: 1-ethyl-3-methylimidazolium trifluoromethanesulfonate (EMI-TfO), 1-butyl-3-methylimidazolium trifluoromethanesulfonate (BMI-TfO), ethylmethylimidazolium tetrafluoroborate (EMIBF4), ethylmethylimidazolium bis(trifluoromethanesulfonyl)imide (EMITFSI), and the like. A plurality of the ionic liquids, which form the mixed ionic liquid, preferably contain multiple types of imidazolium cations such as a 1-ethyl-3-methylimidazolium ion and 1-butyl-3-methylimidazolium ion in some cases. From the viewpoint of ensuring the motion stability of the polymer actuator element 1 over a long period, the mixed ionic liquid preferably contains triflate anions in some cases. Thus, a preferred specific example of the mixed ionic liquid is one containing 1-ethyl-3-methylimidazolium trifluoromethanesulfonate (EMI-TfO) and 1-butyl-3-methylimidazolium trifluoromethanesulfonate (BMI-TfO). Hereinafter, descriptions are made using the case where the mixed ionic liquid is composed of EMI-TfO and BMI-TfO (the mixed ionic liquid is hereinafter also referred to as "mixed ionic liquid 1") as a specific example.

The melting point of EMI-TfO is -10 °C and the melting point of BMI-TfO is 12 °C. Thus, the first ionic liquid, which has the lowest melting point among the ionic liquids forming the mixed ionic liquid 1, is EMI-TfO. The blending ratio is determined such that the melting point of the mixed ionic liquid 1 is lower than -10 °C. In descriptions below, the weight percentage of EMI-TfO in the mixed ionic liquid 1 is referred to as "blending ratio".

Fig. 2 is one obtained by plotting the melting points of multiple types of mixed ionic liquids 1 with various blending ratios together with the melting point of an ionic liquid composed of BMI-TfO (corresponding to a mixed ionic liquid 1 with a blending ratio of 0%) and with the melting point of an ionic liquid composed of EMI-TfO (corresponding to a mixed ionic liquid 1 with a blending ratio of 100%). A dashed line in the figure shows an approximate curve given by a quartic function. Varying the blending ratio varies the melting point of each mixed ionic liquid 1. In this specification, a mixed ionic liquid which is lowest among mixed ionic liquids obtained by varying the blending amount of a plurality of ionic liquids forming a mixed ionic liquid is referred to as a first mixed ionic liquid. In the mixed ionic liquids 1, setting the blending ratio to about 80% allows the first mixed ionic liquid to be obtained. Thus, the mixed ionic liquid used in the polymer actuator element 1 is preferably the first mixed ionic liquid or a mixed ionic liquid 1 having a composition close to that of the first mixed ionic liquid.

In this regard, the melting point $T_{mm}$ of the mixed ionic liquid in the polymer actuator element 1 preferably satisfies the following inequality together with the melting point Tm1 of the first ionic liquid and the melting point Tmm1 of the first mixed ionic liquid:

$$Tmm1 \leq Tmm \leq Tmm1 + (Tm1 - Tmm1) / 2.$$

When the melting point Tmm of the mixed ionic liquid satisfies the above inequality, enhancing the low-temperature characteristics of the polymer actuator element 1, which includes the mixed ionic liquid, is more stably achieved. Incidentally, as specifically shown on the basis of Fig. 2, since the melting point Tm1 of the first ionic liquid is -12 °C and the melting point Tmm1 of the first mixed ionic liquid is about -46 °C, the blending ratio is preferably set within the range of about 60% to about 87% such that the melting point Tmm of the mixed ionic liquid 1 is -46 °C to -29 °C.

Material for the base polymer for electrolytes is not particularly limited. Examples of the material for the base polymer for electrolytes include polyvinylidene fluoride, fibrillated polytetrafluoroethylene (Fb-PTFE), such Fb-PTFE as contained in the electrode layers 3 and 4, and unfibrillated polytetrafluoroethylene. The base polymer for electrolytes may be made from multiple types of materials.

The electrode layers, each of which is placed on a corresponding one of the two principal surfaces of the electrolyte layer, both include a base polymer for electrode layers, a carbon material, and a mixed ionic liquid.

As material making up the base polymer for electrode layers, such Fb-PTFE as contained in the electrode layers 3 and 4, unfibrillated polytetrafluoroethylene, polyvinylidene fluoride, and the like are exemplified. The base polymer for electrolyte layers may be made from multiple types of materials. The material making up the base polymer for electrolyte layers may be common to the material making up the base polymer for electrolytes.

As material making up the carbon material, activated carbon; carbon black; nano-carbon materials such as carbon nanofibers, carbon nanotubes, and carbon nanohorns; and the like are exemplified. The carbon material may be made from multiple types of materials. The material making up the carbon material may be one that has been activated by activation treatment to have increased surface area.

In the electrode layers 3 and 4, the ratio of the weight of the mixed ionic liquid to the weight of the carbon material is preferably 0.5 or more and 3 or less in some cases from the viewpoint of ensuring the responsivity and having an appropriate deformation.

The polymer actuator element 1 according to one embodiment of the present invention can be used as a movable portion of various devices. The motion thereof is soft and smooth unlike the motion of movable portions composed of a motor and the like. In addition, the weight of the movable portion can be suppressed to a low level relatively to the amount of displacement. Thus, the polymer actuator element 1 can be appropriately used in three-dimensional display devices such as Braille displays and three-dimensional displays and motion devices reproducing the motion of flags and the like and the motion of animals such as butterfly with high reality.

The embodiments described above are intended to facilitate the understanding of the present invention and are not intended to limit the present invention. Thus, the members disclosed in the embodiments are intended to include all design modifications and equivalents that belong to the technical scope of the present invention. The multilayer structure according to one embodiment of the present invention can function as, for example, a sensor element. In particular, when the multilayer structure, which has a structure common to the polymer actuator element 1, is deformed by applying an external force to the distal end portion 7, a potential difference is accordingly induced between the electrode layers 3 and 4. The deformation of the distal end portion can be measured by detecting the potential difference. In the case where the multilayer structure is connected to a device (power supply) having a feed function and a device (measuring instrument) having a measurement function, the multilayer structure can function as a polymer actuator element or a sensor element. When the device having the feed function has a function for measuring the amount of feed, the multilayer structure can concurrently exert both of a function as a sensor element and a function as an actuator element.

EXAMPLES

The present invention is further described below in detail with reference to examples. The present invention is not limited to these.

(EXAMPLE 1)

In Example 1, a polymer actuator element composed of a multilayer structure was prepared under conditions below. Each step was performed at room temperature in air unless otherwise specified.

(1) Preparation of Carbon-containing Film

i) Second Kneading Step

A base polymer was added to carbon materials below, followed by kneading, whereby paste was prepared.

Carbon materials: activated carbon and carbon black Base polymer: Fb-PTFE

Herein, the ratio of the weight of the base polymer to the total weight of the carbon materials was 0.11.

ii) Pelletizing Step

The paste, which was obtained in the kneading step, was pressurized using a pelletizer, whereby pellets were obtained.

iii) Film-forming Step

The pellets, which were obtained in the pelletizing step, were uniaxially stretched, whereby film-like bodies with a thickness of 200 $\mu$m were obtained.

iv) Impregnation Step

The film-like bodies obtained as described above were impregnated with a mixed ionic liquid 1 below by dripping an appropriate amount of the mixed ionic liquid 1 onto the film-like bodies, whereby carbon-containing films were prepared. Ionic liquid: a mixed ionic liquid 1, composed of EMI-TfO and BMI-TfO, having a blending ratio (the weight ratio of the blending amount of EMI-TfO to the whole mixed ionic liquid 1) of 75%.

(2) Preparation of Polymer Actuator Element

i) Stacking Step

An electrolyte layer (a thickness of 20 $\mu$m) having a configuration below was prepared.

Base polymer: 100 mg of polyvinylidene fluoride (PVdF)
Ionic liquid: 100 mg of the above mixed ionic liquid 1

Two electrode layers composed of the carbon-containing films, which were impregnated with the mixed ionic liquid 1, and the electrolyte layer were stacked such that a principal surface of each of the electrode layers faced a corresponding one of principal surfaces of the obtained electrolyte layer. In particular, one of the electrode layers (a thickness of 200 $\mu$m) was put on a flat plane, the electrolyte layer was put thereon, and the other electrode layer (a thickness of 200 $\mu$m) was put thereon. Obtained stacked members were pressed and were thereby joined together, whereby a multilayer body with a thickness of 420 $\mu$m was obtained. Herein, the two stacked electrode layers were arranged such that the orientation of Fb-PTFE was aligned.

ii) Cutting Step

The multilayer body, which was obtained in the above stacking step, was cut using a cutting blade in a direction along the stacking direction of the multilayer body, whereby a polymer actuator element composed of a multilayer structure having a rectangular shape in plan view and a size of 5 mm $\times$ 10 mm was obtained.

(COMPARATIVE EXAMPLE 1)

A polymer actuator element was obtained by performing substantially the same operation as that used in Example 1 except that an ionic liquid composed of EMI-TfO was used instead of the mixed ionic liquid 1 used in Example 1.

(COMPARATIVE EXAMPLE 2)

A polymer actuator element was obtained by performing substantially the same operation as that used in Example 1 except that an ionic liquid composed of BMI-TfO was used instead of the mixed ionic liquid 1 used in Example 1.

(MEASUREMENT EXAMPLE 1) Measurement of Amount of Displacement of Actuator Elements

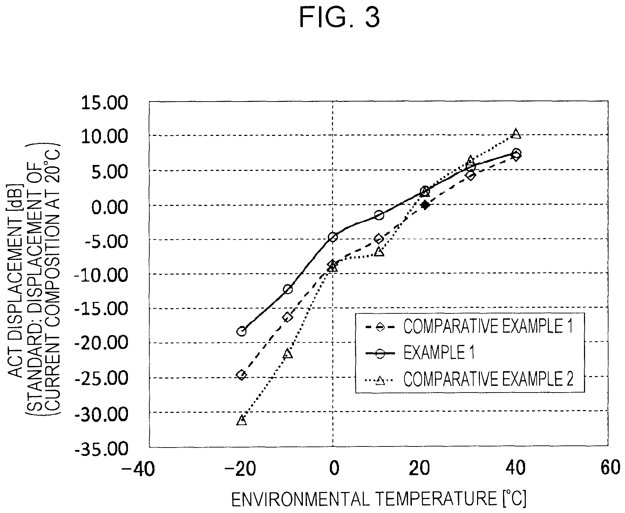

The polymer actuator element prepared in the example and the comparative examples were left for 10 minutes in a de-energized state so as to have a temperature equal to a predetermined environmental temperature. Thereafter, each polymer actuator element was energized for 5 minutes, the amount of displacement thereof was measured after the influence of the heat generated by operating the polymer actuator element was reduced, and the measurement value was set to the amount of displacement at the environmental temperature. This measurement was performed every 10 °C in the range of -20 °C to 40 °C. Among the obtained measurement results, other measurement results were normalized on the basis (0 dB) of the amount of displacement of the polymer actuator element prepared in Comparative Example 1 at an environmental temperature of 20 °C, whereby a profile illustrating the dependence of the amount of displacement on the environmental temperature was obtained for each of the polymer actuator elements prepared in the example and the comparative examples. The obtained profiles were shown in Fig. 3.

As shown in Fig. 3, it was confirmed that the polymer actuator element, including the mixed ionic liquid containing a plurality of the ionic liquids, according to Example 1 exhibited motion characteristics more excellent than those of the polymer actuator elements, containing one type of ionic liquid only, according to the comparative examples on the low-temperature side, particularly in a 10 °C or less region. Furthermore, it was confirmed that the polymer actuator element according to Example 1 exhibited motion characteristics equaling or exceeding those of the polymer actuator element, containing one type of ionic liquid only, according to the comparative example in a 20 °C or more region higher than either of the melting points of the ionic liquids contained in the mixed ionic liquid.

Industrial Applicability

As described above, a polymer actuator element including a multilayer structure according to the present invention has excellent low-temperature characteristics and is, therefore, useful in enabling the range of application of the polymer actuator element to be expanded.

Reference Signs List

1       Polymer actuator element
2       Electrolyte layer
3, 4    Electrode layer
5       Proximal end portion
6       Fixing support portions
7       Distal end portion

**Claims**

1.  A multilayer structure comprising an electrolyte layer and electrode layers each of which is placed on a corresponding one of two principal surfaces of the electrolyte layer,

    wherein the electrolyte layer comprises a mixed ionic liquid containing a plurality of ionic liquids and a base polymer for electrolytes,
    the electrode layers both comprise a base polymer, a carbon material, and the mixed ionic liquid, and
    the melting point Tmm of the mixed ionic liquid is lower than the melting point Tm1 of a first ionic liquid which has the lowest melting point among a plurality of the ionic liquids.

2.  The multilayer structure according to Claim 1, wherein the melting point Tmm of the mixed ionic liquid and the melting point Tm1 of the first ionic liquid satisfy the following inequality:

$$Tmm1 \leq Tmm \leq Tmm1 + (Tm1 - Tmm1) / 2$$

(where Tmm1 is the melting point of a first mixed ionic liquid which has the lowest melting point among mixed ionic liquids obtained by varying the blending amount of a plurality of the ionic liquids forming the mixed ionic liquid).

3. The multilayer structure according to Claim 1 or 2, wherein the mixed ionic liquid contains multiple types of cations.

4. The multilayer structure according to Claim 3, wherein the mixed ionic liquid contains multiple types of imidazolium cations.

5. The multilayer structure according to any one of Claims 1 to 4, wherein the mixed ionic liquid contains triflate anions.

6. The multilayer structure according to Claim 5, wherein the mixed ionic liquid contains 1-ethyl-3-methylimidazolium trifluoromethanesulfonate (EMI-TfO) and 1-butyl-3-methylimidazolium trifluoromethanesulfonate (BMI-TfO) and the ratio of the weight of 1-butyl-3-methylimidazolium trifluoromethanesulfonate (BMI-TfO) to the weight of 1-ethyl-3-methylimidazolium trifluoromethanesulfonate (EMI-TfO) contained in the mixed ionic liquid is 1.5 or more and 4 or less.

7. The multilayer structure according to any one of Claims 1 to 6, wherein the electrode layers contain the carbon material and the ratio of the weight of the mixed ionic liquid to the weight of the carbon material is 0.5 or more and 3 or less.

8. A polymer actuator element comprising the multilayer structure according to any one of Claims 1 to 7.

9. A device comprising the polymer actuator element according to Claim 8 as a movable portion.

10. A sensor element comprising the multilayer structure according to any one of Claims 1 to 7.

11. A device comprising the sensor element according to Claim 10 as a measuring portion.

12. A device comprising the multilayer structure according to any one of Claims 1 to 7, the device enabling the multilayer structure to function as an actuator element and to function as a sensor element.

# FIG. 1

# FIG. 2

# FIG. 3

# INTERNATIONAL SEARCH REPORT

| | International application No. |
|---|---|
| | PCT/JP2017/009398 |

**A. CLASSIFICATION OF SUBJECT MATTER**
*B32B7/02*(2006.01)i, *B32B27/18*(2006.01)i, *C08K5/02*(2006.01)i, *C08L101/00* (2006.01)i, *H02N11/00*(2006.01)i

According to International Patent Classification (IPC) or to both national classification and IPC

**B. FIELDS SEARCHED**

Minimum documentation searched (classification system followed by classification symbols)
B32B1/00-43/00, C08K5/02, C08L101/00, H02N11/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2013-034368 A  (National Institute of Advanced Industrial Science and Technology et al.),<br>14 February 2013 (14.02.2013),<br>claims; 0001, 0010, 0014 to 0027, 0029, 0048 to 0050; examples; fig. 1<br>& US 2013/0009514 A1<br>fig. 1; 0002, 0026 to 0047, 0051, 0071 to 0074; examples; claims<br>& US 2016/0240770 A1 | 1,3-5,7-12<br>4<br>2,6 |
| Y<br>A | WO2016/031270 A1  (Murata Mfg. Co., Ltd.),<br>03 March 2016 (03.03.2016),<br>0042<br>(Family: none) | 4<br>1-3,5-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June 2017 (01.06.17) | 13 June 2017 (13.06.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

## INTERNATIONAL SEARCH REPORT

| | International application No. |
|---|---|
| | PCT/JP2017/009398 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-216964 A  (Konica Minolta Business | 4 |
| A | Technologies, Inc.), 24 September 2009 (24.09.2009), 0040 to 0041 (Family: none) | 1-3,5-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014104331 A